# EUROPÄISCHE PATENTANMELDUNG

(11) **EP 4 386 040 A1**
(43) Veröffentlichungstag der Anmeldung: **19.06.2024**
(21) Anmeldenummer: 23194505.6
(22) Anmeldetag: 31.08.2023
(51) Int. Cl.: C08J 5/04, C08J 5/24, H01Q 17/00

(54) **RADARABSORBIERENDES FASERKUNSTSTOFFVERBUNDMATERIAL, HALBZEUG, LAGENAUFBAU, VERBUNDBAUTEIL UND OBJEKT MIT REDUZIERTER RADARSIGNATUR, SOWIE HERSTELLVERFAHREN**

(30) Priorität: 12.12.2022 DE 102022004648
(71) Anmelder: MBDA Deutschland GmbH, 86529 Schrobenhausen (DE)
(72) Erfinder: SCHREINER, David, 80339 München (DE)
(74) Vertreter: Isarpatent

(57) **Zusammenfassung**

Die Erfindung betrifft ein radarabsorbierendes Faserkunststoffverbundmaterial (1; 1'), mit einer mit einem Kunststoffmaterial (3) gebildeten Matrix (2; 2') und mit in die Matrix eingebetteten Verstärkungsfasern (4). Die Matrix ist hierbei mit einer Vielzahl von Partikeln (6; 6') eines Additivs dotiert. Die Partikel sind in der Matrix verteilt angeordnet und in das Kunststoffmaterial der Matrix eingebettet. Darüber hinaus betrifft die Erfindung ein Halbzeug (10; 10') für die Herstellung eines radarabsorbierenden Verbundbauteils (31; 32; 33; 34) sowie einen Lagenaufbau (20) mit zwei oder mehr übereinander angeordneten Lagen (11, 12, 13) eines derartigen Halbzeugs. Die Erfindung betrifft weiterhin ein Verbundbauteil (31; 32; 33; 34) und ein Objekt (41; 42; 43; 44) mit reduzierter Radarsignatur sowie ein Verfahren zur Herstellung eines vorimprägnierten Halbzeugs (10; 10') und ein Verfahren zur Herstellung eines Verbundbauteils (31; 32; 33; 34) mit reduzierter Radarsignatur.

## Beschreibung

### TECHNISCHES GEBIET DER ERFINDUNG

Die Erfindung betrifft allgemein das Gebiet der Verminderung der Radarsignatur von Objekten und hierfür eingerichteter Materialien. Hierbei betrifft die Erfindung ein radarabsorbierendes Faserkunststoffverbundmaterial, ein Halbzeug und einen Lagenaufbau für die Herstellung eines radarabsorbierenden Verbundbauteils, sowie ein Verbundbauteil und ein Objekt mit reduzierter Radarsignatur. Die Erfindung betrifft darüber hinaus ein Verfahren zur Herstellung eines vorimprägnierten Halbzeugs und ein Verfahren zur Herstellung eines Verbundbauteils mit reduzierter Radarsignatur.

### HINTERGRUND DER ERFINDUNG

Ein herkömmlicher Weg zur Reduzierung der Radarsignatur eines Objekts besteht zum Beispiel darin, auf die Oberfläche des Objekts nachträglich eine zusätzliche Lackierung als radarabsorbierendes Material (abgekürzt RAM) aufzubringen.

Durch eine derartige Lackschicht und insbesondere durch die Zusammensetzung der Lackierung, die oft mit Eisenkugeln versetzt ist, wird die Masse des Objekts wesentlich erhöht, was unerwünscht sein kann. Zudem ist Aufwand erforderlich, um eine zuverlässige Verbindung der Lackierung mit der eigentlichen Struktur sicherzustellen.

Ferner dienen derartige herkömmliche radarabsorbierende Materialien einzig dem Zweck der Signaturminimierung.

Weiterhin können bei einer herkömmlichen Herangehensweise zur Reduzierung der Radarsignatur Schäume als radarabsorbierende Materialien verwendet werden.

Derartige Schäume tragen nur begrenzt zur strukturellen Integrität bei und führen in erster Linie zu einem hohen Volumenzuwachs der allgemeinen Struktur des Objekts.

Der Frequenzbereich, in dem derartige herkömmliche Wege zur Verminderung der Radarsignatur effektiv sind, ist darüber hinaus relativ eng.

In der US 2010/0271253 A1 beispielsweise wird darüber hinaus ein radarabsorbierendes Verbundmaterial beschrieben, welches Fasern aufweist, auf denen Kohlenstoff-Nanoröhren (carbon nanotubes, CNTs) gezüchtet sind. Ferner wird eine Platte mit einem Verbundmaterial beschrieben, wobei das Verbundmaterial ein mit CNTs versehenes Fasermaterial zumindest in einem Teil eines Matrixmaterials aufweist und das Fasermaterial eine erste Schicht, die die Radarreflektion reduziert, und eine zweite Schicht, die die Energie der absorbierten Radarstrahlung dissipiert, bildet.

Die Herstellung eines Verbundmaterials mit besonderen Verstärkungsfasern, die in einem speziellen, zeitintensiven Verfahren hergestellt werden, ist jedoch mit einem relativ hohen Aufwand verbunden und kostenintensiv.

Wünschenswert wäre daher ein effektiver Weg zur Reduzierung der Radarsignatur, der unter Vermeidung von einem oder mehreren Nachteilen herkömmlicher radarabsorbierender Materialien, wie zum Beispiel zusätzliches Gewicht und/oder Volumen von Lacken oder Schäumen, eine Verminderung von Aufwand und Kosten ermöglicht.

### ZUSAMMENFASSUNG DER ERFINDUNG

Vor diesem Hintergrund liegt der Erfindung die Aufgabe zu Grunde, Aufwand und Kosten in der Herstellung von radarabsorbierenden Faserverbundmaterialien sowie von Bauteilen und Objekten mit reduzierter Radarsignatur zu vermindern und zugleich Gewichts- und/oder Volumenzuwächse zu vermeiden oder zu begrenzen.

Erfindungsgemäß wird diese Aufgabe durch ein radarabsorbierendes Faserkunststoffverbundmaterial mit den Merkmalen des Anspruchs 1 und/oder durch ein Halbzeug mit den Merkmalen des Anspruchs 7 und/oder durch einen Lagenaufbau mit den Merkmalen des Anspruchs 9 und/oder durch ein Verbundbauteil mit den Merkmalen des Anspruchs 10 und/oder durch ein Objekt mit den Merkmalen des Anspruchs 12 und/oder durch ein Verfahren mit den Merkmalen des Anspruchs 13 und/oder durch ein Verfahren mit den Merkmalen des Anspruchs 15 gelöst.

Demgemäß wird ein radarabsorbierendes Faserkunststoffverbundmaterial mit einer mit einem Kunststoffmaterial gebildeten Matrix und mit in die Matrix eingebetteten Verstärkungsfasern vorgeschlagen. Die Matrix ist mit einer Vielzahl von Partikeln eines Additivs dotiert. Hierbei sind die Partikel in der Matrix verteilt angeordnet und in das Kunststoffmaterial der Matrix eingebettet.

Ferner wird ein Halbzeug, insbesondere ein Prepreg, für die Herstellung eines radarabsorbierenden Verbundbauteils vorgeschlagen, wobei das Halbzeug eine Verstärkungsfaseranordnung aufweist, die mit einem Kunststoffmatrixmaterial, beispielsweise einem aushärtbaren und zumindest teilweise unausgehärteten oder einem thermoplastischen Kunststoffmatrixmaterial, vorimprägniert ist. In dem Kunststoffmatrixmaterial sind hierbei eine Vielzahl von Partikeln eines Additivs verteilt angeordnet.

Weiterhin wird ein Lagenaufbau für die Herstellung eines radarabsorbierenden Verbundbauteils bereitgestellt, wobei der Lagenaufbau zwei oder mehr übereinander angeordnete Lagen eines derartigen Halbzeugs aufweist. Hierbei sind Gehalte der Lagen an den Partikeln des Additivs in dem Kunststoffmatrixmaterial verschieden.

Es wird darüber hinaus ein Verbundbauteil mit reduzierter Radarsignatur, aufweisend eine mit einem Kunststoffmaterial gebildete Matrix und in die Matrix eingebettete Verstärkungsfasern, vorgeschlagen. Die Matrix ist hierbei mit einer Vielzahl von Partikeln eines Additivs dotiert und die Partikel des Additivs sind hierbei in der Matrix verteilt angeordnet und in dem Kunststoffmaterial der Matrix eingebettet.

Bereitgestellt wird zudem ein Objekt mit reduzierter Radarsignatur, insbesondere ein Flugkörper oder ein Luftfahrzeug oder ein Wasserfahrzeug oder ein Landfahrzeug, aufweisend mindestens ein derartiges erfindungsgemäßes Verbundbauteil, insbesondere Strukturbauteil, und/oder mindestens eine mit einem erfindungsgemäßen radarabsorbierenden Faserkunststoffverbundmaterial gebildete Komponente, insbesondere Strukturkomponente.

Die Erfindung stellt ferner ein Verfahren zur Herstellung eines vorimprägnierten Halbzeugs für die Herstellung von Verbundbauteilen mit reduzierter Radarsignatur bereit, umfassend die Schritte:
Beifügen loser Partikel eines Additivs, insbesondere loser Kohlenstoff-Nanoröhren oder loser eisenhaltiger Partikel, zu einem Kunststoffmatrixmaterial oder zu mindestens einer Komponente desselben in einer Menge, die die Erzielung eines vordefinierten Gehalts an den Partikeln des Additivs in dem Kunststoffmatrixmaterial ermöglicht; und
Imprägnieren einer trockenen Verstärkungsfaseranordnung mit Verstärkungsfasern, die von den Partikeln des Additivs, insbesondere den Kohlenstoff-Nanoröhren, im Wesentlichen frei sind, mit dem Kunststoffmatrixmaterial.

Zudem wird erfindungsgemäß ein Verfahren zur Herstellung eines Verbundbauteils mit reduzierter Radarsignatur bereitgestellt, umfassend die Schritte:
Bereitstellen von zwei oder mehr Halbzeugen, die mittels eines erfindungsgemäßen Verfahrens zur Herstellung eines vorimprägnierten Halbzeugs hergestellt sind und deren Gehalte an den Partikeln des Additivs, insbesondere den Kohlenstoff-Nanoröhren und/oder den eisenhaltigen Partikeln, in dem Kunststoffmatrixmaterial verschieden sind;
Bilden eines Lagenaufbaus mit einer übereinander geschichteten Anordnung mindestens eines Abschnitts eines ersten und mindestens eines Abschnitts eines zweiten der Halbzeuge;
Aushärten oder Konsolidieren des Lagenaufbaus, insbesondere unter erhöhtem Druck und/oder erhöhter Temperatur, zur Bildung des Verbundbauteils.

Eine der Erfindung zu Grunde liegende Idee besteht darin, die Matrix des Faserkunststoffverbundmaterials mit den Partikeln zu dotieren und hierdurch das Verhalten des Verbundmaterials beim Einfall von Radarwellen sowie die resultierende Radarsignatur eines mit diesem Material ausgebildeten Verbundbauteils bzw. Objekts zu beeinflussen und einzustellen. Zur Beeinflussung der Radarsignatur kann somit ein Verbundmaterial für Bauteile herangezogen werden, die tragende und strukturelle Funktionen in einem Objekt übernehmen können. Das Aufbringen zusätzlicher, schwerer und/oder voluminöser Schichten auf das Objekt wird hierdurch vermieden. Zudem wird durch die Integration der radarabsorbierenden Eigenschaft in das lasttragende Material eine hohe Zuverlässigkeit sowie eine hohe Verschleißbeständigkeit und insbesondere auch Korrosionsbeständigkeit erreicht.

Die Erfindung stellt somit insbesondere ein Material bereit, das in der Lage ist, Radarstrahlung zu absorbieren und zugleich einen lasttragenden Anteil in der Struktur zu übernehmen, d.h. zur Fähigkeit der Struktur, Lasten aufzunehmen, beizutragen.

Weiterhin ermöglicht die Erfindung eine kosteneffiziente Verminderung der Radarsignatur eines Bauteils bzw. Objekts. Die erfindungsgemäß vorgeschlagene Dotierung der Matrix kann in relativ einfacher und kostengünstiger Weise durchgeführt werden.

Eine weitere Effizienzsteigerung ermöglichen das erfindungsgemäße Halbzeug und der erfindungsgemäße Lagenaufbau. Mittels dieser wird es in kosteneffizienter und flexibler Weise möglich, eine gezielte Variation oder Schichtung der Dotierung im Verbundmaterial zu erreichen. Beispielsweise können eine Mehrzahl von Halbzeugen mit unterschiedlichem Dotierungsgehalt hergestellt werden, aus denen sich unterschiedlichste Lagenaufbauten erstellen lassen.

Vorteilhafte Ausgestaltungen und Weiterbildungen der Erfindung ergeben sich aus den weiteren Unteransprüchen sowie aus der Beschreibung unter Bezugnahme auf die Figuren.

In einer Ausgestaltung der Erfindung sind die Partikel des Additivs als oder mit Kohlenstoff-Nanoröhren ausgebildet. Mit Hilfe der Kohlenstoff-Nanoröhren kann die Radarsignatur eines Verbundbauteils wirkungsvoll beeinflusst werden.

Insbesondere sind bei Ausbildung der Partikel des Additivs als oder mit Kohlenstoff-Nanoröhren die Gehalte der Lagen des Lagenaufbaus an den Kohlenstoff-Nanoröhren in dem Kunststoffmatrixmaterial verschieden.

Beispielsweise können die Kohlenstoff-Nanoröhren einwandige, doppelwandige oder mehrwandige Kohlenstoff-Nanoröhren oder eine Kombination dieser umfassen. Die Radarsignatur eines Verbundbauteils bzw. Objekts kann somit auf weiter verbesserte Weise gezielt beeinflusst und eingestellt werden.

In anderen Ausgestaltungen können die Partikel des Additivs als eisenhaltige Partikel oder mit eisenhaltigen Partikeln ausgebildet sein. Insbesondere können hierbei die eisenhaltigen Partikel als ferritische Partikel und/oder Carbonyleisenpartikel ausgebildet sein. Auch mittels eisenhaltiger Partikel kann eine wirkungsvolle Beeinflussung der Radarsignatur erreicht und durch die Integration in die Matrix mittels Dotieren dieser auch mit den eisenhaltigen Partikeln eine Gewichtsersparnis erzielt werden.

Insbesondere können bei Ausbildung der Partikel des Additivs als oder mit eisenhaltigen Partikeln die Gehalte der Lagen des Lagenaufbaus an den eisenhaltigen Partikeln in dem Kunststoffmatrixmaterial verschieden sein.
Insbesondere sind die Lagen des Lagenaufbaus mit Partikeln gleicher Art dotiert.

Es können in einer anderen denkbaren Ausgestaltung bei einem Lagenaufbau sowohl Kohlenstoff-Nanoröhren als auch eisenhaltige Partikel zur Dotierung vorgesehen sein, wobei die Gehalte der Lagen des Lagenaufbaus an den Kohlenstoff-Nanoröhren und/oder den eisenhaltigen Partikeln verschieden sind.

In weiteren Ausgestaltungen sind die Partikel länglich, plättchenartig oder flockenartig ausgebildet. Zum Beispiel können die Kohlenstoff-Nanoröhren länglich ausgebildet sein. Ferner können bei einigen Weiterbildungen der Erfindung die eisenhaltigen Partikel länglich, insbesondere stäbchenförmig, oder plättchenförmig oder flockenförmig ausgebildet sein.

Bei einer wiederum anderen Ausgestaltung können die eisenhaltigen Partikel kugelförmig ausgebildet sein, zum Beispiel als Carbonyleisenkugeln.

In einer Ausgestaltung sind die Partikel des Additivs, insbesondere die Kohlenstoff-Nanoröhren oder die eisenhaltigen Partikel, in der Matrix zufällig orientiert angeordnet. Eine zufällige Orientierung der Partikel kann beispielsweise mittels Zufügens dieser zu dem Kunststoffmaterial der Matrix oder zu einer Komponente desselben vor dessen Aushärtung oder Verfestigung und gleichmäßiges, homogenes Einmengen in das Kunststoffmaterial in vergleichsweise einfacher Weise erreicht werden. Insbesondere bei hinreichender Menge an Partikeln je Volumeneinheit der Matrix kann mit zufällig orientierten Partikeln bei vergleichsweise geringem Aufwand ein vorteilhafter radarabsorbierender Effekt erzielt werden.

In einer ebenfalls vorteilhaften Weiterbildung sind die Partikel des Additivs, insbesondere die eisenhaltigen Partikel, in der Matrix geordnet und/oder periodisch orientiert angeordnet. Dies kann beispielsweise durch Anlegen eines äußeren Magnetfeldes bei der Verarbeitung des Faserkunststoffverbundmaterials, insbesondere bei der Formgebung und Aushärtung oder Konsolidierung des Kunststoffmaterials der Matrix durch Anlegen des äußeren Magnetfeldes im Arbeitsbereich eines Formwerkzeugs, erzielt werden. Die radarabsorbierende Wirkung kann auf diese Weise weiter verbessert werden, insbesondere auch bei relativ geringen Partikelanteilen, mithin einer relativ geringen Menge an Partikeln je Volumeneinheit der Matrix.

In einer Weiterbildung sind die Partikel des Additivs, insbesondere die eisenhaltigen Partikel, derart geordnet orientiert in der Matrix angeordnet, dass eine Längs- oder Haupterstreckungsrichtung der Partikel jeweils mindestens im Mittel im Wesentlichen parallel zu einer Dickenrichtung des Faserkunststoffverbundmaterials oder des Halbzeugs oder des Lagenaufbaus oder des Verbundbauteils ausgerichtet ist. Alternativ hierzu können die Partikel des Additivs derart geordnet orientiert in der Matrix angeordnet sein, dass eine Längs- oder Haupterstreckungsrichtung der Partikel jeweils mindestens im Mittel quer zu einer Dickenrichtung des Faserkunststoffverbundmaterials oder des Halbzeugs oder des Lagenaufbaus oder des Verbundbauteils, insbesondere mindestens im Mittel im Wesentlichen normal zu der Dickenrichtung, ausgerichtet ist.

In einer Ausgestaltung kann ein Massenanteil der Partikel des Additivs an der Matrix, beispielsweise der Kohlenstoff-Nanoröhren oder der eisenhaltigen Partikel, kleiner oder gleich etwa 60 Massenprozent der Matrix sein, insbesondere zwischen etwa 1 Massenprozent und etwa 60 Massenprozent der Matrix betragen. Der Massenanteil der Partikel entspricht hierbei dem Anteil der Partikel an der Gesamtmasse der Matrix, welche die Partikel mit umfasst. Auf diese Weise können insbesondere auch mit Hilfe einer gezielten Wahl des Massenanteils der Partikel die gewünschten Eigenschaften des Faserkunststoffverbundmaterials, insbesondere dessen elektromagnetische Eigenschaften, eingestellt werden.

In einer Ausgestaltung sind die Partikel des Additivs in dem Kunststoffmatrixmaterial des Halbzeugs gleichmäßig verteilt.

Bei einer bevorzugten Weiterbildung kann innerhalb des Verbundbauteils zumindest in einer Richtung, insbesondere in einer Dickenrichtung, des Verbundbauteils ein Gehalt der Matrix an Partikeln des Additivs variieren. Dies kann dazu beitragen, die Radarsignatur des Verbundbauteils weiter zu vermindern, beispielsweise indem in der Dickenrichtung von einer in einem Verwendungszustand äußeren Seite des Verbundbauteils zu einer in dem Verwendungszustand inneren Seite des Verbundbauteils gesehen der Gehalt an Partikeln, beispielsweise zumindest in einem Teil des Verbundbauteils, zunimmt.

Insbesondere kann das Kunststoffmaterial der Matrix ein aushärtbares Harz sein, insbesondere ein Epoxidharz oder ein Polyimidharz. Mit einem derartigen Kunststoffmaterial können leistungsfähige Verbundwerkstoffe und Verbundbauteile für anspruchsvolle Anwendungen und mit hoher mechanischer Tragfähigkeit hergestellt werden. In anderen ebenfalls nützlichen Ausgestaltungen kann das Kunststoffmaterial der Matrix ein thermoplastisches Kunststoffmaterial sein.

In einer Weiterbildung weisen die Verstärkungsfasern Kohlefasern oder Glasfasern oder Basaltfasern oder Aramidfasern oder pflanzliche Fasern, beispielsweise Hanffasern, auf. Derartige Fasern ermöglichen die Herstellung leistungsfähiger Verbundwerkstoffe und Verbundbauteile. Die Verwendung anderer als Verstärkungsfasern zur Einbettung in eine Kunststoffmatrix geeigneter Fasern ist alternativ oder zusätzlich ebenfalls vorstellbar. Auch Kombinationen der vorstehend genannten Verstärkungsfasern sind denkbar.

In einer Ausgestaltung des Verfahrens zur Herstellung eines vorimprägnierten Halbzeugs sind die Partikel des Additivs, insbesondere die Kohlenstoff-Nanoröhren oder eisenhaltigen Partikel, in dem Kunststoffmatrixmaterial, mit dem die trockene Verstärkungsfaseranordnung imprägniert wird, im Wesentlichen homogen verteilt. Dies ermöglicht es, eine gleichmäßige Verteilung der Partikel in dem vorimprägnierten Halbzeug, insbesondere in der Fläche oder der/den Haupterstreckungsrichtung(en) des Halbzeugs, zu erreichen. Ein derartiges Halbzeug hat definierte Eigenschaften. Die Verwendung von Abschnitten eines derartigen Halbzeugs bei der Herstellung von Verbundbauteilen ermöglicht es, fertige Faserverbundbauteile mit definierten, präzise eingestellten Eigenschaften in effizienter Weise zu erhalten.

In einer Ausgestaltung des Verfahrens zur Herstellung eines vorimprägnierten Halbzeugs werden die losen Partikel des Additivs, insbesondere die losen Kohlenstoff-Nanoröhren oder die losen eisenhaltigen Partikel, zu einer A-Komponente des Kunststoffmatrixmaterials, insbesondere eines aushärtbaren Kunststoffmatrixmaterials wie etwa des Epoxidharzes, beigefügt.

Beispielsweise können die losen Partikel dem unausgehärteten Kunststoffmatrixmaterial oder der Komponente desselben, insbesondere der A-Komponente, in Pulverform beigemengt werden.

Bei einer weiteren Ausgestaltung des Verfahrens zur Herstellung eines vorimprägnierten Halbzeugs wird die imprägnierte Verstärkungsfaseranordnung nach Abschluss des Imprägnierens gekühlt, beispielsweise auf eine Temperatur unterhalb von 0 Grad Celsius. Auf diese Weise kann ein vorzeitiges Aushärten des aushärtbaren Kunststoffmatrixmaterials vor einer Weiterverarbeitung des Halbzeugs vermieden werden.

In einer anderen Ausgestaltung des Verfahrens zur Herstellung eines vorimprägnierten Halbzeugs können die losen Partikel des Additivs, beispielsweise in Pulverform, dem thermoplastischen Kunststoffmatrixmaterial beigemengt werden. Hierbei wird das thermoplastische Kunststoffmatrixmaterial vorzugsweise erwärmt, derart, dass es für das Beimengen hinreichend erweicht und/oder aufschmilzt.

Bei einer Weiterbildung des Verfahrens zur Herstellung eines Verbundbauteils mit reduzierter Radarsignatur ist vorgesehen, dass die zwei oder mehr Halbzeuge, mit deren Abschnitten der Lagenaufbau gebildet wird, das gleiche Kunststoffmatrixmaterial aufweisen. Durch das gemeinsame Aushärten der Lagen des Lagenaufbaus und hierbei des Kunststoffmatrixmaterials in diesen Lagen bzw. die gemeinsame Konsolidierung im Fall einer Thermoplastmatrix wird ein einziger Verbundwerkstoff des Bauteils erhalten, in dem die Schichten bzw. Lagen untrennbar verbunden sind und zugleich ein gewünschter Gradient und/oder stufenförmiger Verlauf des Partikelgehalts vorliegt. Derart hergestellte Verbundbauteile weisen eine hohe Verschleißfestigkeit und hohe Beständigkeit gegenüber Umwelteinflüssen, insbesondere hohe Korrosionsbeständigkeit, auf.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der Erfindung hinzufügen.

Es versteht sich, dass die vorstehend erläuterten Ausgestaltungen und Weiterbildungen jeweils auf das radarabsorbierende Faserkunststoffverbundmaterial, das Halbzeug, den Lagenaufbau, das Verbundbauteil, das Objekt und auf die Verfahren der Erfindung in analoger Weise Anwendung finden können.

### KURZBESCHREIBUNG DER ZEICHNUNGEN

Die Erfindung wird nachfolgend anhand der in den schematischen Figuren angegebenen Ausführungsbeispiele näher erläutert. Von den Figuren zeigen
- Fig. 1: ein schematisch dargestelltes Detail eines Faserkunststoffverbundes oder Halbzeugs in einer Schnittdarstellung gemäß einem Ausführungs-beispiel der Erfindung;
- Fig. 2: eine schematische Querschnittsdarstellung eines Lagenaufbaus bei der Herstellung eines Verbundbauteils gemäß einem Ausführungsbeispiel;
- Fig. 3: schematisch einen Flugkörper mit einem Verbundbauteil oder mehreren Verbundbauteilen gemäß einem Ausführungsbeispiel der Erfindung;
- Fig. 4: schematisch ein Luftfahrzeug mit einem Verbundbauteil oder mehreren Verbundbauteilen gemäß einem Ausführungsbeispiel der Erfindung;
- Fig. 5: schematisch ein Wasserfahrzeug mit einem Verbundbauteil oder mehreren Verbundbauteilen gemäß einem Ausführungsbeispiel der Erfindung;
- Fig. 6: schematisch ein Landfahrzeug mit einem Verbundbauteil oder mehreren Verbundbauteilen gemäß einem Ausführungsbeispiel der Erfindung;
- Fig. 7: ein schematisches Ablaufdiagramm zur Erläuterung eines Verfahrens gemäß einem Ausführungsbeispiel der Erfindung;
- Fig. 8: ein schematisches Ablaufdiagramm zur Erläuterung eines weiteren Verfahrens gemäß einem Ausführungsbeispiel der Erfindung; und
- Fig. 9: ein schematisch dargestelltes Detail eines Faserkunststoffverbundes oder Halbzeugs in einer Schnittdarstellung gemäß einem weiteren Ausführungsbeispiel.

Die beiliegenden Figuren sollen ein weiteres Verständnis der Ausführungsformen der Erfindung vermitteln. Sie veranschaulichen Ausführungsbeispiele und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN DER ERFINDUNG

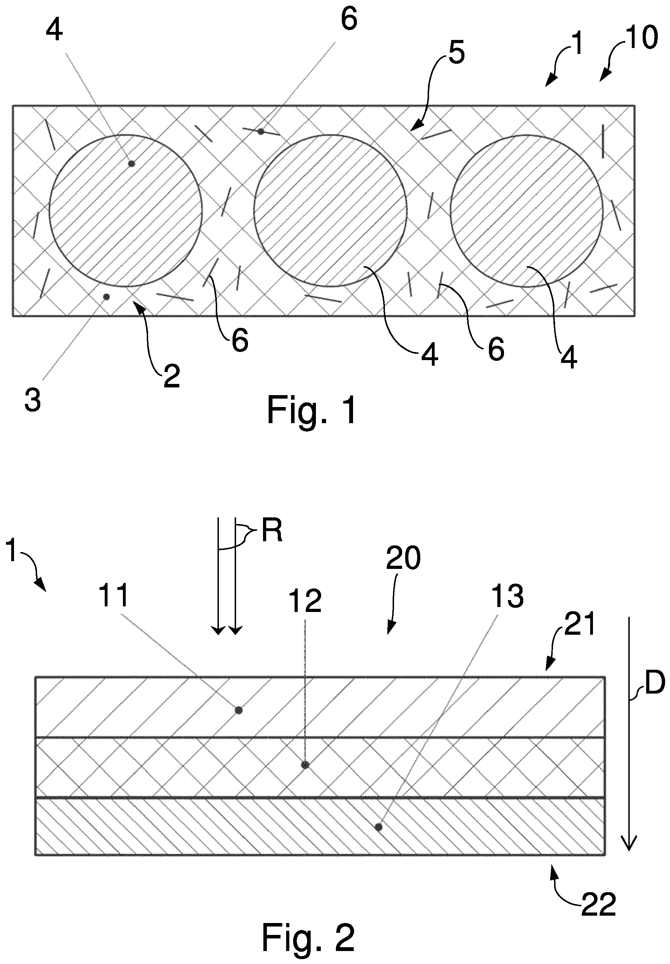

Fig. 1 zeigt ein Detail eines Faserkunststoffverbundmaterials 1 gemäß einem Ausführungsbeispiel mit einer Matrix 2 und mit Verstärkungsfasern 4 einer Verstärkungsfaseranordnung 5. Die Verstärkungsfasern 4 sind in die Matrix 2 eingebettet, wobei in Fig. 1 nur einige wenige Fasern 4 beispielhaft zur Illustration gezeigt sind. Fig. 1 zeigt eine Schnittdarstellung quer zu einer Längsrichtung der Verstärkungsfasern 4.

Es versteht sich, dass in einem mit dem Verbundmaterial 1 ausgebildeten Bauteil eine sehr viel größere Anzahl an Verstärkungsfasern 4 verwendet werden und dass die Verstärkungsfaseranordnung 5 nicht auf eine Anordnung paralleler Verstärkungsfasern 4 beschränkt ist, sondern eine Vielzahl von Verstärkungsfaseranordnungen 5 denkbar sind. Die Verstärkungsfaseranordnung 5 kann etwa ein Fasergelege oder ein anderes Fasergebilde, wie beispielhaft etwa ein Verstärkungsfasergeflecht oder Verstärkungsfasergewebe, sein. Die Fasern 4 können in der Verstärkungsfaseranordnung 5 entlang einer, zwei oder mehr Richtungen ausgerichtet und somit uni-, bi- oder multidirektional angeordnet sein, oder die Fasern 4 können verwoben, verflochten oder verschlungen sein. Ferner könnten bei Bedarf Nähfäden oder Heftfäden zusätzlich vorgesehen sein.

Die Verstärkungsfaseranordnung 5 kann zum Beispiel als Fasern 4 Kohlefasern oder Glasfasern oder Basaltfasern oder Aramidfasern oder pflanzliche Fasern aufweisen. Die pflanzlichen Fasern können beispielsweise Hanffasern sein. Verstärkungfasern 4 anderer Typen sowie Kombinationen unterschiedlicher Fasertypen in der Anordnung 5 sind denkbar.

Die Matrix 2 ist mit einem Kunststoffmaterial 3 ausgebildet. Das Kunststoffmaterial 3 ist bei dem Ausführungsbeispiel ein aushärtbares Harz, zum Beispiel ein Epoxidharz oder ein Polyimidharz, wobei die Verwendung anderer warm- oder kaltaushärtender Harze ebenfalls vorstellbar ist. Allgemein können beispielsweise unterschiedliche Duromere als Kunststoffmaterial 3 verwendet werden. Alternativ ist ferner die Verwendung eines thermoplastischen Kunststoffmatrixmaterials 3 möglich.

Nach Aushärten des aushärtbaren Kunststoffmaterials 3, etwa im Autoklaven unter Anwendung von erhöhtem Druck und erhöhter Temperatur, wird ein Verbundwerkstoff erzielt, der bei geringem Gewicht hohe Lasten aufnehmen kann und in dem die Faserverläufe durch gezielte Gestaltung der Verstärkungsfaseranordnung 5 an die zu erwartenden Belastungen vorab angepasst werden können. Analoge Vorteile können nach Konsolidierung einer Thermoplastmatrix unter Anwendung von Temperatur und Druck erzielt werden.

Das in Fig. 1 gezeigte Faserkunststoffverbundmaterial 1 (im Englischen zum Beispiel ein Polymer Matrix Composite oder PMC) ist als ein radarabsorbierendes Faserkunststoffverbundmaterial 1 ausgebildet und kann im Englischen auch als ein "Advanced Low Observable Composite" (ALOC) bezeichnet werden.

Mittels Dotieren der Matrix 2 mit einer Vielzahl von Partikeln 6, bei denen es sich in Fig. 1 um Kohlenstoff-Nanoröhren, im Englischen Carbon Nanotubes oder abgekürzt CNTs, handelt, werden die Eigenschaften des Materials 1 im Hinblick auf Reflektion und Absorption einfallender Radarwellen in einem breiten Wellenlängenbereich verbessert, um eine möglichst geringe Radarsignatur und Radarerkennbarkeit zu erreichen. Die Partikel 6 dienen hierbei als ein Additiv, welches die Beeinflussung der Wechselwirkung des Materials 1 mit einfallenden Radarwellen ermöglicht. CNTs als Partikel 6 beispielsweise werden durch einwirkende Radarwellen in Schwingungen versetzt und ermöglichen auf diese Weise eine Dissipation von Radarenergie.

Bei dem Ausführungsbeispiel der Fig. 1 sind die Partikel 6, hier beispielhaft CNTs, in der Matrix 2 gleichmäßig und zufällig verteilt sowie mit zufälligen Orientierungen angeordnet und in das Kunststoffmaterial 3 eingebettet. Fig. 1 zeigt die zufällige Verteilung und Orientierung der CNTs 6 in der Schnittebene in schematischer Weise, wobei es sich versteht, dass die Orientierung der CNTs 6 auch in einer Richtung senkrecht zur Schnittebene zufällig verteilt ist.

Es erfolgt somit in Fig. 1 eine exklusive Dotierung der Matrix 2 des Faserkunststoffverbundes 1 (FKV) mittels der Partikel 6, hier Carbon-Nanotubes (CNTs) 6.

Das Faserkunststoffverbundmaterial 1 ist dafür ausgebildet, sowohl einfallende Radarstrahlung zu absorbieren als auch in einem Verbundbauteil einen lasttragenden Anteil in einer Struktur zu übernehmen. Mittels des FKV 1 wird eine effiziente und kostengünstige Reduzierung der Radarsignatur eines Objekts ohne wesentliche unerwünschte Gewichts- und Volumenzuwächse möglich.

Als Kohlenstoff-Nanoröhren 6 (CNTs) können bei dem Ausführungsbeispiel der Fig. 1 Kohlenstoff-Nanoröhren unterschiedlicher Ausprägung zum Einsatz kommen. Zum Beispiel können die Kohlenstoff-Nanoröhren 6 als einwandige Kohlenstoff-Nanoröhren (im Englischen Single-Walled Carbon Nanotubes oder SWCNTs), doppelwandige Kohlenstoff-Nanoröhren (im Englischen Double-Walled Carbon Nanotubes oder DWCNTs), oder mehrwandige Kohlenstoff-Nanoröhren (im Englischen Multi-Walled Carbon Nanotubes oder MWCNTs) ausgebildet sein. Kombinationen von SWCNTs, DWCNTs und/oder MWCNTs sind denkbar. Somit können die Kohlenstoff-Nanoröhren 6 SWCNTs und/oder DWCNTs und/oder MWCNTs zur Einstellung der Radarsignatur umfassen. Die Kohlenstoff-Nanoröhren 6 sind mit Strukturen gebildet, die im Vergleich zu den Wellenlängen, bei denen das Material 1 Effektivität zeigt, klein sind.

Faserverbundbauteile können mit dem Faserkunststoffverbundmaterial 1 in einem Prepreg-Autoklav-Verfahren hergestellt werden. Bei einem derartigen Verfahren werden vorimprägnierte Halbzeugabschnitte, die im Falle duromeren Matrixmaterials 3 jeweils mindestens eine mit dem nicht oder nur teilweise ausgehärteten Kunststoffmatrixmaterial 3 imprägnierte Verstärkungsfaseranordnung 5 aufweisen, zu einem Lagenaufbau zusammengefügt, je nach den erforderlichen mechanischen Eigenschaften und der gewünschten Geometrie. Dieser Lagenaufbau wird dann unter Aufbringen erhöhten Drucks und erhöhter Temperatur im Autoklaven ausgehärtet. Nach einer eventuellen Endbearbeitung des ausgehärteten Bauteils wird ein fertiges, hochwertiges Faserverbundbauteil erhalten.

Fig. 1 illustriert ferner ein Detail eines vorimprägnierten Halbzeugs 10. Analog zu dem oben Beschriebenen sind rein exemplarisch nur wenige parallel zueinander angeordnete Fasern 4 geschnitten und schematisch dargestellt. Das Halbzeug 10 ist als ein sog. Pre-Preg für die Herstellung eines radarabsorbierenden Verbundbauteils vorgesehen. Die Faseranordnung 5 ist in dem Halbzeug 10 mit dem zumindest teilweise unausgehärteten Kunststoffmatrixmaterial 3 vorimprägniert. Vorzugsweise wird das Halbzeug 10 kühl gelagert, beispielsweise bei Temperaturen unterhalb von 0 Grad Celsius, zum Beispiel zwischen etwa -6 und etwa -12 Grad Celsius, um die Aushärtung des Matrixmaterials 3 zu verzögern. Die Vielzahl von Partikeln 6, hier CNTs, sind, wie oben für das Verbundmaterial 1 beschrieben, in dem zumindest teilweise unausgehärteten Kunststoffmatrixmaterial 3 verteilt angeordnet.

Die Partikel bzw. Carbon-Nanotubes 6 können in unterschiedlichen Massenanteilen der Matrixkomponente 2 eines FKVs zugefügt werden. Insbesondere kann der Anteil der Partikel 6, insbesondere der CNTs 6, bis zu etwa 60 Massenprozent an der Gesamtmasse der Matrix 2 betragen.

Zur Bildung eines Lagenaufbaus 20 werden mehrere Halbzeuge 10, wie unter Bezugnahme auf die schematische Fig. 1 beschrieben, mit verschiedenen Gehalten, insbesondere Massenanteilen, jeweils der Partikel 6 im Kunststoffmatrixmaterial 3 bereitgestellt. Das Kunststoffmatrixmaterial 3 als solches ist für jede der Lagen der Halbzeuge 10 von identischer Zusammensetzung, die Halbzeuge 10 und mit diesen gebildeten Lagen unterscheiden sich somit hinsichtlich der Gehalte an Partikeln 6 in der Matrix 2. Die Faseranordnungen 5 von Halbzeugen 10 mit unterschiedlichem Partikelgehalt können gleich oder verschieden ausgebildet sein.

Ein Lagenaufbau 20 ist in Fig. 2 schematisch geschnitten dargestellt. Hierbei sind beispielhaft drei Lagen 11, 12 und 13 übereinander geschichtet angeordnet, wobei, wie soeben beschrieben, das Kunststoffmatrixmaterial 3 der Lagen 11, 12, 13 gleich, die Gehalte an Partikeln 6 in dem Kunststoffmatrixmaterial 3 jeweils verschieden sind. Beispielhaft weist die einer äußeren Seite 21 eines späteren Verbundbauteils benachbarte Lage 11 einen relativ geringen Dotierungsgehalt an Partikeln 6, etwa CNTs 6, auf. Die im fertigen Verbundbauteil weiter innen liegende Lage 12 weist einen Gehalt an den Partikeln 6 auf, der höher als jener der Lage 11 ist. Die im späteren Verbundbauteil einer inneren Seite 22 desselben benachbarte Lage 13 weist einen wiederum höheren Gehalt an den Partikeln 6 in der späteren Matrix 2 als die Lage 12 auf. Weitere kompatible Lagen mit oder ohne Dotierung durch Partikel 6 können vorhanden sein.

In dem Halbzeug 10 und jeweils in jeder der Lagen 11, 12, 13 sind die Partikel 6 in dem Kunststoffmatrixmaterial 3 gleichmäßig verteilt.

Ein mittels Aushärten des Lagenaufbaus 20, etwa im Autoklaven, erhaltenes radarabsorbierendes Verbundbauteil, zum Beispiel in Form einer Platte oder mit einer anderen geometrischen Gestaltung, weist eine in Dickenrichtung D desselben, siehe Fig. 2, stufenweise Veränderung des Gehalts an Partikeln 6, insbesondere CNTs, auf, wobei der Gehalt nahe der inneren Seite 22 am höchsten, nahe der äußeren Seite 21 am geringsten ist. Indem die Kunststoffmaterialien 3 der Lagen 11, 12, 13 gleich sind, sind diese nach dem Aushärtevorgang vorteilhaft untrennbar als eine einzige Matrix 2 miteinander verbunden, was zu einer hohen Verschleißfestigkeit und Korrosionsbeständigkeit beiträgt.

Die geringdotierte Lage 11 ermöglicht es der Radarenergie, in das Verbundbauteil einzudringen. In der nächstinneren Lage 12 mit höherer Dotierung werden Mehrfachreflektionen der eingetretenen Radarwellen erreicht, wodurch Radarenergie dissipiert wird und in Wärme übergeht. Die hohe Dotierung der Lage 13 ermöglicht es dieser, nach Art eines Spiegels, auf die Lage 13 gelangende Radarenergie in die Schicht 12 zurückzuwerfen. Eine beispielhafte Einfallsrichtung R der Radarstrahlung von außen ist in Fig. 2 schematisch angedeutet.

Positionierung und Dotierungsgehalte der FKV-Schichten im Gesamtverbund können somit zum Aufbau radarabsorbierender Strukturen (sog. RAS) in vielerlei Weise flexibel variiert werden. Interne Reflektionen aufgrund zunehmender Konzentration an CNTs 6 führen zu einer Steigerung der Permittivität und folglich zur Dissipation der - durch die Radarstrahlung eingebrachten - Energie. Hierbei kann eine Reduzierung der Radarsignatur des Verbundbauteils bzw. Objekts über einen breiten Frequenzbereich erreicht werden und dieser Frequenzbereich zum Beispiel durch die Wahl von Positionierung und Partikelgehalt der Lagen maximiert werden. Insbesondere kann durch die Verwendung mehrerer Lagen 11, 12, 13 mit unterschiedlichem Dotierungsgehalt ein maßgeschneiderter Aufbau 20 gebildet werden, der eine breitbandigere Radarabsorption als nur eine homogen dotierte Schicht ermöglicht. Gleichwohl ist ein einschichtiger Aufbau mit nur einer dotierten Schicht ebenfalls möglich und nützlich.

Das dotierte Faserkunststoffverbundmaterial 1 weist zudem eine hohe spezifische Festigkeit und Steifigkeit auf, wodurch eine Lastübertragbarkeit resultiert. Somit vereint dieses Material sowohl die Fähigkeit zur Dämpfung einer Radarstrahlung als auch die Fähigkeit zur Übernahme von Lasten, die in die Struktur eingebracht werden.

Erwähnt sei, dass bei der Herstellung des Verbundbauteils zusätzlich zu den mit den Partikeln 6 dotierten Lagen, etwa den Lagen 11, 12, 13, noch Lagen aus Halbzeugen) mit von Partikeln 6 freiem Matrixmaterial 3 in den Lagenaufbau 20 integriert werden können.

Der ausgehärtete Lagenaufbau 20 aus Fig. 2 ist ebenfalls ein Beispiel eines Faserkunststoffverbundmaterials 1.

In Varianten kann aus Halbzeugen 10 mit thermoplastischem Kunststoffmatrixmaterial 3, das insbesondere wiederum für jede Lage 11, 12, 13 gleich ist, durch gemeinsames Konsolidieren der Lagen 11, 12, 13 ein Verbundbauteil mit der vorstehend beschriebenen Schichtung der Partikelgehalte hergestellt werden. Mit Blick auf entsprechende Halbzeuge und Verbundbauteile mit thermoplastischer Matrix und die Vorteile wird auf die obigen Ausführungen verwiesen.

Vorteilhafte radarabsorbierende, die Radarsignatur vermindernde Eigenschaften können bereits mit zufälliger Orientierung der CNTs 6 in der Matrix 2 erreicht werden.

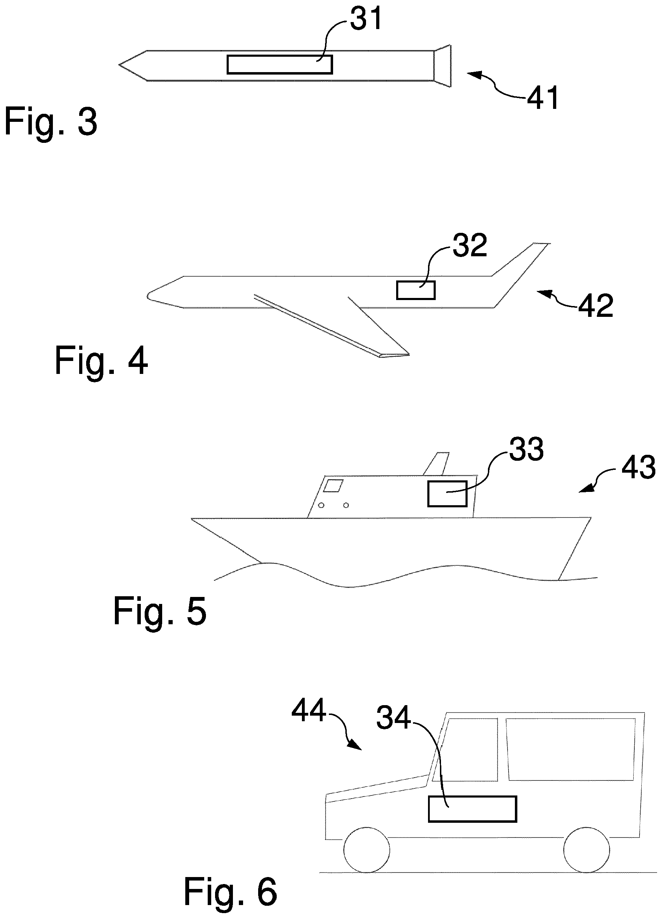

Auf diese Weise kann die Radarsignatur verschiedenster Objekte reduziert werden. Es zeigen beispielhaft Fig. 3 einen Flugkörper 41, der ein Verbundbauteil 31 aufweist, Fig. 4 ein als Flugzeug ausgebildetes Luftfahrzeug 42, das ein Verbundbauteil 32 aufweist, Fig. 5 ein Wasserfahrzeug 43, zum Beispiel ein Schiff, das ein Verbundbauteil 33 aufweist, und Fig. 6 ein Landfahrzeug 44, das ein Verbundbauteil 34 aufweist. Eine Anwendung des Materials 1, des Halbzeugs 10 und des Lagenaufbaus 20 auf andere Arten von Objekten ist ebenfalls denkbar.

Jedes der beispielhaften, schematisch skizzierten Verbundbauteile 31, 32, 33, 34 kann ausgehend von den dotierten, vorimprägnierten Halbzeugen 10 mit einer oder bevorzugt mehreren Lagen 11, 12, 13, wie beispielhaft in Fig. 2 gezeigt und oben beschrieben, ausgebildet sein, weist eine mit den Partikeln 6 dotierte Matrix 2 und im Fall mehrerer Lagen eine Schichtung des Partikelgehalts auf, und hat somit radarabsorbierende Eigenschaften.

Die Verbundbauteile 31, 32, 33, 34 können insbesondere als Strukturbauteile der Objekte 41, 42, 43 bzw. 44 zum Einsatz kommen. Somit weist jedes der Objekte 41, 42, 43, 44 mindestens eine Strukturkomponente mit dem Faserkunststoffverbundmaterial 1 auf.

In einer Variante, die in den Figuren nicht gezeigt ist, können Verbundbauteile wie z.B. die Bauteile 31, 32, 33, 34, insbesondere wenn diese einen gleichmäßigen Partikelgehalt auch in der Dickenrichtung D aufweisen sollen, statt durch Aushärten vorimprägnierter Halbzeuge 10 im Autoklaven auch in der Weise erzeugt werden, dass eine trockene Verstärkungsfaseranordnung 5 des Bauteils mit der Zielgeometrie mit einem die Partikel 6, etwa die CNTs, enthaltenden Kunststoffmatrixmaterial 3 infiltriert wird. Beispielsweise könnte hierfür das Verfahren des Resin Transfer Moulding (RTM), mit oder ohne Zuhilfenahme von Unterdruck, zum Einsatz kommen.

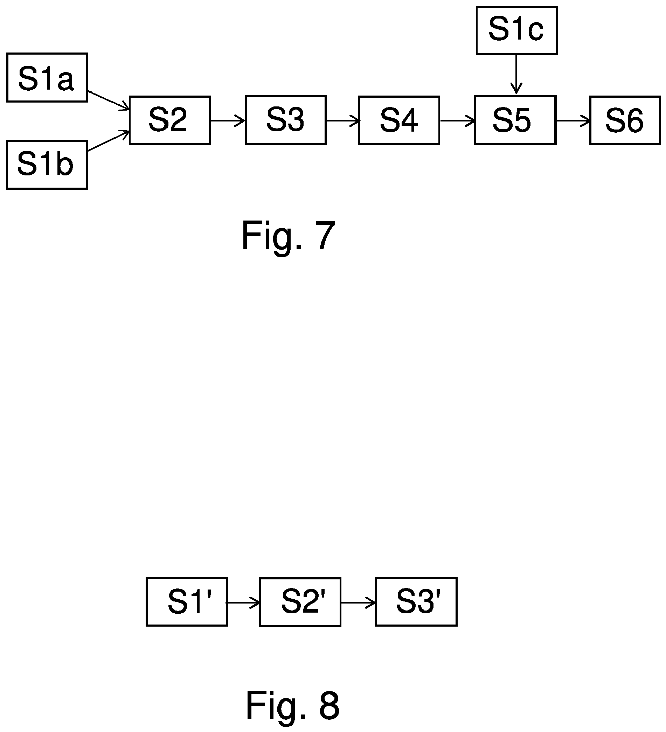

Fig. 7 und 8 illustrieren schematisch Herstellverfahren gemäß bevorzugten Ausführungsbeispielen der Erfindung, wobei die Verarbeitung des Faserkunststoffverbundes 1 im Stile des Prepreg-Autoklav-Verfahrens durchgeführt wird.

Die dotierten Halbzeugschichten werden zu einem Lagenaufbau zusammengeführt und gemeinsam unter Druck und Temperatur ausgehärtet. Dies ermöglicht eine Einstellung von unterschiedlichen Dotierungsgehalten an CNTs 6 in Dickenrichtung D.

Zudem kann der Lagenaufbau um beliebige nicht-dotierte FKV-Lagen erweitert werden. Die Aushärtung kann ggf. auch ohne zusätzlich aufgebrachten Druck und Temperatur erfolgen. Durch die gemeinsame Verarbeitung von mittels Additiven wie CNTs 6 dotierten FKVs für die Radarabsorption und weiteren FKV-Lagen kann erreicht werden, dass die erzeugten radarabsorbierenden Verbundbauteile dauerhaft und verschleißfest sind und ihre radardämpfende Funktion über lange Zeit zuverlässig erbringen.

Zunächst werden vorimprägnierte, insbesondere flächige Halbzeuge 10 hergestellt, wie in Fig. 7 schematisch illustriert.

Im Schritt S1a werden lose Partikel 6 des Additivs bereitgestellt, insbesondere die losen Kohlenstoff-Nanoröhren 6, in der gewählten Ausprägung, also zum Beispiel SWCNTs, DWCNTs und/oder MWCNTs. Die Partikel 6, etwa die CNTs, können in Pulverform bereitgestellt werden.

Im Schritt S1b wird ein Kunststoffmatrixmaterial 3 oder werden Komponenten desselben bereitgestellt. Ein Epoxidharz als Kunststoffmatrixmaterial 3 kann zum Beispiel zweikomponentig mit einer A-Komponente und einer B-Komponente bereitgestellt werden.

Im Schritt S2 werden die losen Partikel 6 dem unausgehärteten, insbesondere flüssigen Kunststoffmatrixmaterial 3 oder mindestens einer der Komponenten desselben beigefügt. Wird als Material 3 ein Epoxidharz verwendet, so werden die Partikel 6 vorzugsweise der A-Komponente hinzugefügt. Die beigefügte Menge an Partikeln 6 ist derart gewählt, dass bei gleichmäßiger Verteilung dieser ein vordefinierter Gehalt an Partikeln 6 in dem Kunststoffmatrixmaterial 3 z. B. je Masseneinheit oder Volumeneinheit desselben erzielt wird. Falls das Kunststoffmatrixmaterial 3 thermoplastisch ist, können die Partikel 6 dem Material 3 nach dessen Erwärmung und Verflüssigung beigefügt werden.

Im Schritt S3 werden das Kunststoffmatrixmaterial 3 bzw. die Komponente, etwa die A-Komponente, und die Partikel 6 gründlich vermischt, bis die Partikel 6 homogen in dem Kunststoffmatrixmaterial 3 bzw. der Komponente verteilt sind.

Im Fall eines zwei- oder mehrkomponentigen Harzes wie Epoxidharz wird die in Schritt S3 auf diese Weise mit den Partikeln 6 versehene Komponente, etwa die A-Komponente, mit der oder den weiteren Komponente(n) des Harzes, bei dem Epoxidharz mit der B-Komponente, im Schritt S4 sorgfältig und homogen vermischt. Bei einem einkomponentigen Matrixmaterial 3 kann S4 entfallen.

Im Schritt S1c wird eine trockene Verstärkungsfaseranordnung 5 mit Verstärkungsfasern 4 für das zu erzeugende vorimprägnierte Halbzeug 10 bereitgestellt, wobei die Anordnung 5 und die Fasern 4 wie oben näher beschrieben ausgebildet sein können. Die Faseranordnung 5 kann insbesondere im Wesentlichen flächig ausgebildet sein.

Die trockene Verstärkungsfaseranordnung 5, deren Fasern 4 im Schritt S1c frei von den zur Dotierung vorgesehenen Partikeln 6 und insbesondere frei von den Kohlenstoff-Nanoröhren 6 sind, wird im Schritt S5 mit dem dotierten Kunststoffmatrixmaterial 3 imprägniert, um ein Halbzeug 10 nach Art eines Prepreg zu erhalten.

Das vorimprägnierte Halbzeug 10 wird im Falle eines aushärtbaren Kunststoffmaterials 3 sodann in Schritt S6 auf eine niedrige Temperatur, beispielsweise unterhalb von 0 Grad Celsius, abgekühlt, um ein Aushärten des Kunststoffmatrixmaterials 3 vor der Verarbeitung des Halbzeugs 10 zum fertigen Verbundbauteil zu verhindern. Im vorimprägnierten Halbzeug 10 ist das Matrixmaterial 3 somit zumindest teilweise unausgehärtet. Im Falle eines thermoplastischen Materials 3 kann im Schritt S6 ein Abkühlen, zum Beispiel auf Raumtemperatur, und eine damit einhergehende Verfestigung des Materials 3 erfolgen.

Fig. 8 illustriert schematisch die Herstellung eines Verbundbauteils, etwa des Bauteils 31, 32, 33, 34, mit reduzierter Radarsignatur.

Im Schritt S1' werden zwei oder mehr mittels der in Fig. 7 illustrierten Vorgehensweise hergestellter Halbzeuge 10 bereitgestellt, deren Gehalte an den Partikeln 6 des Additivs, insbesondere den Kohlenstoff-Nanoröhren, in dem Kunststoffmatrixmaterial 3 verschieden sind.

Im Schritt S2' wird ein Lagenaufbau 20 gebildet, wobei Abschnitte der in Schritt S1' bereitgestellten Halbzeuge 10 mit unterschiedlichem Dotierungsgehalt an Partikeln 6 und gleichem Kunststoffmatrixmaterial 3 übereinander geschichtet angeordnet werden. Die Halbzeugabschnitte bilden somit Lagen wie beispielhaft anhand der Lagen 11, 12, 13 in Fig. 2 illustriert. In jedem der vorimprägnierten Halbzeuge 10 des Lagenaufbaus 20 ist bevorzugt eine gleichmäßige Verteilung der Partikel 6 insbesondere in der Fläche oder den Haupterstreckungsrichtungen des Halbzeugs 10 vorhanden. Der Lagenaufbau kann bei Bedarf mehrere Abschnitte eines gleichartigen Halbzeugs 10 beinhalten.

Der in Schritt S2' gebildete Lagenaufbau 20 wird in Schritt S3', insbesondere unter erhöhtem Druck und/oder erhöhter Temperatur, beispielsweise im Autoklaven, zur Bildung des Verbundbauteils ausgehärtet. Es ist jedoch in Varianten ein Aushärten bei Raumtemperatur und/oder ohne zusätzliche Anwendung erhöhten Drucks ebenfalls vorstellbar. Bei thermoplastischem Kunststoffmatrixmaterial 3 erfolgt im Schritt S3' statt des Aushärtens ein Konsolidieren des Lagenaufbaus 20 unter Anwendung von Druck und Temperatur.

In Bezug auf Fig.1 wurde vorstehend eine zufällige Orientierung der CNTs 6 in der Matrix 2 beschrieben.

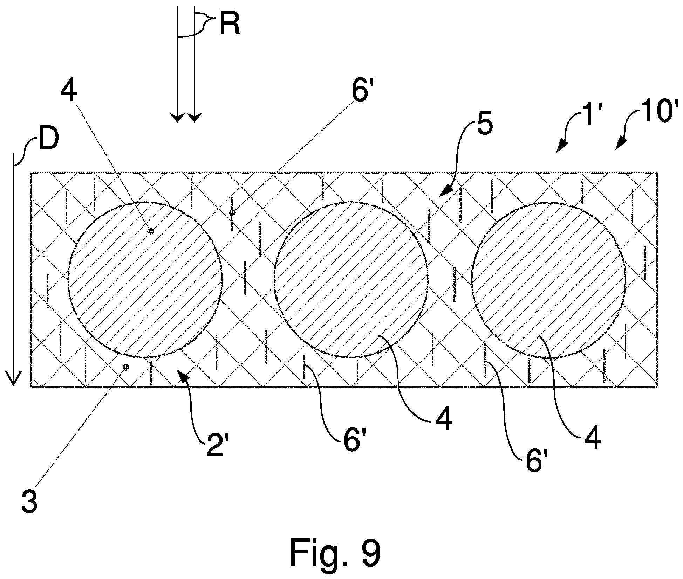

Nachstehend wird unter Bezugnahme auf Fig. 9 eine Variante mit periodisch und geordnet orientierten ferritischen, eisenhaltigen Partikeln 6' in einer Matrix 2' erläutert.

Fig. 9 zeigt analog der Darstellung in Fig. 1 ein Detail eines Faserkunststoffverbundmaterials 1' gemäß einem weiteren Ausführungsbeispiel mit der Matrix 2' und mit Verstärkungsfasern 4 einer Verstärkungsfaseranordnung 5. Die Verstärkungsfasern 4 sind in die Matrix 2' eingebettet, wobei in Fig. 9, wie in Fig. 1, nur einige wenige Fasern 4 beispielhaft zur Illustration eingezeichnet sind. Wiederum analog Fig. 1 illustriert Fig. 9 zudem ein Halbzeug 10'. Das Faserkunststoffverbundmaterial 1' und das Halbzeug 10' unterscheiden sich lediglich in der Art und der orientierten Anordnung der Partikel 6' innerhalb der Matrix 2' von dem in Fig. 1, 2 gezeigten Material 1 bzw. Halbzeug 10. Über die nachstehenden Erläuterung zu Fig. 9 hinausgehend wird auf die obigen Ausführungen verwiesen.

Bei dem Ausführungsbeispiel der Fig. 9 sind die Partikel 6' des Additivs als ferritische Partikel, beispielsweise Partikel aus Carbonyleisen, ausgebildet. Die Partikel 6' sind länglich, beispielsweise stäbchenartig, oder plättchenartig oder flockenförmig ausgebildet und in Fig. 9 schematisch am Beispiel stäbchenförmiger Partikel 6' skizziert. Die Ferritstäbchen 6' sind hierbei jeweils mit deren Längserstreckungsrichtung parallel zu der Dickenrichtung D des FVK 1' oder Halbzeugs 10', die einer Dickenrichtung eines Lagenaufbaus und/oder Verbundbauteils entsprechen kann, ausgerichtet.

Hierbei kann derart vorgegangen werden, dass das Halbzeug 10' oder der Lagenaufbau 20 wie vorstehend beschrieben hergestellt und das Halbzeug 10' bzw. der Lagenaufbau 20 danach, im Falle eines duromeren Kunststoffmaterials 3, in einem Formwerkzeug ausgehärtet wird. Im Falle eines thermoplastischen Kunststoffmaterials 3 kann in dem Formwerkzeug ein Konsolidieren sowie Abkühlen und damit einhergehendes Verfestigen des Kunststoffmaterials 3 erfolgen. Während des Aushärtens oder Konsolidierens und Festwerdens des Kunststoffmaterials 3 wird bei der Variante der Fig. 9 von außen ein Magnetfeld im Bereich des Formwerkzeugs angelegt, das eine Ausrichtung der eisenhaltigen Partikel 6' in der sich bildenden Matrix 2' bewirkt. In der festen Matrix 2' ist die Orientierung der Partikel 6' dann fixiert.

In einer zeichnerisch nicht dargestellten Variante können die Partikel 6' mit deren Längserstreckungsrichtung entlang einer anderen Richtung, beispielsweise quer, insbesondere normal, zu der in Fig. 9 eingezeichneten Dickenrichtung D, ausgerichtet sein.

Die in Fig. 9 schematisch gezeigten Partikel 6' können alternativ als Flocken gebildet sein, deren flächige Erstreckung in der schematischen Darstellung der Fig. 9 dann projizierend ausgerichtet ist.

Eine zufällige oder stattdessen eine periodische, geordnete Ausrichtung der Partikel 6 bzw. 6' kann insbesondere abhängig von den zu erzielenden elektromagnetischen Eigenschaften des Materials 1 bzw. 1' gewählt werden.

In Varianten des oben unter Bezugnahme auf Fig. 1 beschriebenen Ausführungsbeispiels mit zufällig verteilten CNTs 6 können ferritische, eisenhaltige Partikel, etwa Carbonyleisenpartikel, anstelle der Partikel 6 der Fig. 1 zufällig orientiert in der Matrix 2 verteilt sein, wobei in diesem Falle die Ferritpartikel wiederum länglich, etwa stäbchen- oder plättchen- oder flockenförmig, ausgebildet sind. Fig. 1 illustriert somit ebenfalls in einer Variante zufällig orientierte ferritische Partikel 6 von länglicher oder flächiger Gestalt in schematischer Weise.

Ferner könnten in einer weiteren zeichnerisch nicht gezeigten Variante als Additivpartikel 6 sphärische ferritische Partikel oder Carbonyleisenkugeln verwendet werden, die zufällig in der Matrix 2 verteilt in das Kunststoffmaterial 3 eingebettet werden.

Eine Kombination von CNTs 6 mit eisenhaltigen Partikeln, etwa ferritischen Partikeln oder Carbonyleisenpartikeln, zum Beispiel mit kugelartiger und/oder stäbchen-, plättchen- oder flockenartiger Gestalt, insbesondere den oben beschriebenen Partikeln 6', in einem Faserverbundkunststoffmaterial, Halbzeug, Lagenaufbau oder Verbundbauteil ist ebenfalls denkbar.

Mit den vorstehend beschriebenen Ausführungsbeispielen der Erfindung können insbesondere nachstehende Vorteile erzielt werden:
- Es kann ein Gradient, insbesondere eine stufenförmige Variation, des Anteils an Partikeln 6, 6', etwa Kohlenstoff-Nanoröhren und/oder ferritischen Partikeln, in der Matrix 2, 2' über die Schichten des Laminates, etwa die Schichten 11, 12, 13 der Fig. 2, eingestellt werden. Auf diese Weise wird die Einstellung einer gewünschten Radarsignatur ermöglicht.
- Es wird lediglich die Matrix 2, 2' dotiert ("doped"). In diese können in kosteneffizienter Weise Verstärkungsfasern 4 eingebettet werden. Im Verbundmaterial 1, 1' trägt/tragen die dotierte Matrix 2, 2'/die dotierten Matrizen 2, 2' zusammen mit den Fasern 4 - die von unterschiedlichem Typ sein können - wesentlich zur strukturellen Integrität bei. Die Kohlenstoff-Nanoröhren 6 können zudem einen ergänzenden, wenngleich begrenzten Anteil zu den vorteilhaften mechanischen Eigenschaften des Verbundmaterials 1 beitragen, insbesondere Festigkeit und/oder Härte der Matrix 2 steigern. Die Dotierung der Matrix 2, 2' kann zudem zu Flexibilität hinsichtlich der Wahl der Fasern 4 beitragen.
- Durch den gemeinsamen Aushärte- oder Konsolidierprozess der dotierten Lagen 11, 12, 13, die wie beschrieben Lasten übernehmen können, und ggf. zusammen mit weiteren lasttragenden Lagen des Verbundmaterials 1, wird eine hohe Verschleißfestigkeit erreicht.
- Ein effizienter und kostengünstiger Weg zur Verminderung der Radarsignatur wird bereitgestellt.

Obgleich die Erfindung vorstehend anhand bevorzugter Ausführungsbeispiele vollständig beschrieben wurde, ist sie nicht darauf beschränkt, sondern auf vielfältige Art und Weise modifizierbar.

Beispielsweise ist die Erfindung nicht auf die vorstehend beschriebenen Kunststoffmatrixmaterialien oder Fasertypen beschränkt. Zudem sind Lagenaufbauten unterschiedlichsten Typs und geometrischer Gestalt denkbar.

### BEZUGSZEICHENLISTE

- 1, 1': Faserkunststoffverbundmaterial
- 2,2': Matrix
- 3: Kunststoffmaterial
- 4: Verstärkungsfaser
- 5: Verstärkungsfaseranordnung
- 6, 6': Partikel
- 10, 10': Halbzeug
- 11, 12, 13: Lage
- 20: Lagenaufbau
- 21: äußere Seite
- 22: innere Seite
- 31, 32: Verbundbauteil
- 33, 34: Verbundbauteil
- 41: Flugkörper
- 42: Luftfahrzeug
- 43: Wasserfahrzeug
- 44: Landfahrzeug
- D: Dickenrichtung
- R: beispielhafte Einfallrichtung von Radarstrahlung
- S1a: Schritt
- S1b: Schritt
- S1c: Schritt
- S2, S3, S4: Schritt
- S5, S6: Schritt
- S1', S2', S3': Schritt

## Patentansprüche

1. Radarabsorbierendes Faserkunststoffverbundmaterial (1; 1'),
mit einer mit einem Kunststoffmaterial (3) gebildeten Matrix (2; 2') und
mit in die Matrix (2; 2') eingebetteten Verstärkungsfasern (4),
wobei die Matrix (2; 2') mit einer Vielzahl von Partikeln (6; 6') eines Additivs dotiert ist und hierbei die Partikel (6; 6') in der Matrix (2; 2') verteilt angeordnet und in das Kunststoffmaterial (3) der Matrix (2; 2') eingebettet sind.

2. Faserkunststoffverbundmaterial nach Anspruch 1,
**dadurch gekennzeichnet, dass** die Partikel (6) des Additivs als oder mit Kohlenstoff-Nanoröhren (6) ausgebildet sind.

3. Faserkunststoffverbundmaterial nach einem der vorstehenden Ansprüche,
**dadurch gekennzeichnet, dass** die Partikel (6') des Additivs als eisenhaltige Partikel (6') oder mit eisenhaltigen Partikeln (6') ausgebildet sind und insbesondere dass die eisenhaltigen Partikel (6') als ferritische Partikel und/oder Carbonyleisenpartikel ausgebildet sind.

4. Faserkunststoffverbundmaterial nach einem der vorstehenden Ansprüche,
**dadurch gekennzeichnet, dass** die Partikel (6; 6') des Additivs, insbesondere die Kohlenstoff-Nanoröhren (6) oder die eisenhaltigen Partikel (6'), in der Matrix (2; 2') zufällig orientiert angeordnet sind.

5. Faserkunststoffverbundmaterial nach einem der vorstehenden Ansprüche,
**dadurch gekennzeichnet, dass** die Partikel (6') des Additivs, insbesondere die eisenhaltigen Partikel (6'), in der Matrix (2') geordnet und/oder periodisch orientiert angeordnet sind.

6. Faserkunststoffverbundmaterial nach einem der vorstehenden Ansprüche,
**dadurch gekennzeichnet, dass** das Kunststoffmaterial (3) der Matrix (2; 2') ein aushärtbares Harz, insbesondere ein Epoxidharz oder ein Polyimidharz, oder ein thermoplastisches Kunststoffmaterial ist und/oder dass die Verstärkungsfasern (4) Kohlefasern oder Glasfasern oder Basaltfasern oder Aramidfasern oder pflanzliche Fasern, beispielsweise Hanffasern, aufweisen.

7. Halbzeug (10; 10'), insbesondere Prepreg, für die Herstellung eines radarabsorbierenden Verbundbauteils (31; 32; 33; 34), wobei das Halbzeug (10; 10') eine Verstärkungsfaseranordnung (5) aufweist, die mit einem Kunststoffmatrixmaterial (3), beispielsweise einem aushärtbaren und zumindest teilweise unausgehärteten oder einem thermoplastischen Kunststoffmatrixmaterial (3), vorimprägniert ist, wobei in dem Kunststoffmatrixmaterial (3) eine Vielzahl von Partikeln (6; 6') eines Additivs verteilt angeordnet sind.

8. Halbzeug nach Anspruch 7,
**dadurch gekennzeichnet, dass** die Partikel (6; 6') des Additivs als oder mit Kohlenstoff-Nanoröhren (6) und/oder eisenhaltigen Partikeln (6') ausgebildet sind und/oder die Partikel (6; 6') des Additivs in dem Kunststoffmatrixmaterial (3) gleichmäßig verteilt sind.

9. Lagenaufbau (20) für die Herstellung eines radarabsorbierenden Verbundbauteils (31; 32; 33; 34), wobei der Lagenaufbau (20) zwei oder mehr übereinander angeordnete Lagen (11, 12, 13) eines Halbzeugs (10; 10') gemäß Anspruch 7 oder 8 aufweist, wobei Gehalte der Lagen (11, 12, 13) an den Partikeln (6; 6') des Additivs, insbesondere den Kohlenstoff-Nanoröhren (6) und/oder eisenhaltigen Partikeln (6'), in dem Kunststoffmatrixmaterial (3) verschieden sind.

10. Verbundbauteil (31; 32; 33; 34) mit reduzierter Radarsignatur, aufweisend eine mit einem Kunststoffmaterial (3) gebildete Matrix (2; 2') und in die Matrix (2; 2') eingebettete Verstärkungsfasern (4), wobei die Matrix (2; 2') mit einer Vielzahl von Partikeln (6; 6') eines Additivs dotiert ist und hierbei die Partikel (6; 6') des Additivs in der Matrix (2; 2') verteilt angeordnet und in dem Kunststoffmaterial (3) der Matrix (2; 2') eingebettet sind.

11. Verbundbauteil nach Anspruch 10,
**dadurch gekennzeichnet, dass** innerhalb des Verbundbauteils (31; 32; 33; 34) zumindest in einer Richtung, insbesondere in einer Dickenrichtung (D), desselben ein Gehalt der Matrix (2; 2') an Partikeln (6; 6') des Additivs veränderlich ist.

12. Objekt (41; 42; 43; 44) mit reduzierter Radarsignatur, insbesondere ein Flugkörper (41) oder ein Luftfahrzeug (42) oder ein Wasserfahrzeug (43) oder ein Landfahrzeug (44), aufweisend mindestens ein Verbundbauteil (31; 32; 33; 34), insbesondere Strukturbauteil, gemäß Anspruch 10 oder 11 und/oder mindestens eine mit einem radarabsorbierenden Faserkunststoffverbundmaterial (1; 1') gemäß einem der Ansprüche 1 bis 6 gebildete Komponente, insbesondere Strukturkomponente.

13. Verfahren zur Herstellung eines vorimprägnierten Halbzeugs (10; 10') für die Herstellung von Verbundbauteilen (31; 32; 33; 34) mit reduzierter Radarsignatur, umfassend die Schritte:
Beifügen loser Partikel (6; 6') eines Additivs, insbesondere loser Kohlenstoff-Nanoröhren (6) oder loser eisenhaltiger Partikel (6'), zu einem Kunststoffmatrixmaterial (3) oder zu mindestens einer Komponente desselben in einer Menge, die die Erzielung eines vordefinierten Gehalts an den Partikeln (6; 6') des Additivs in dem Kunststoffmatrixmaterial (3) ermöglicht; und
Imprägnieren einer trockenen Verstärkungsfaseranordnung (5) mit Verstärkungsfasern (4), die von den Partikeln (6; 6') des Additivs, insbesondere den Kohlenstoff-Nanoröhren (6), im Wesentlichen frei sind, mit dem Kunststoffmatrixmaterial (3).

14. Verfahren nach Anspruch 13,
**dadurch gekennzeichnet, dass** die Partikel (6; 6') des Additivs in dem Kunststoffmatrixmaterial (3), mit dem die trockene Verstärkungsfaseranordnung (5) imprägniert wird, im Wesentlichen homogen verteilt sind.

15. Verfahren zur Herstellung eines Verbundbauteils (31; 32; 33; 34) mit reduzierter Radarsignatur, umfassend die Schritte:
Bereitstellen von zwei oder mehr Halbzeugen (10; 10'), die mittels eines Verfahrens gemäß Anspruch 13 oder 14 hergestellt sind und deren Gehalte an den Partikeln (6; 6') des Additivs, insbesondere den Kohlenstoff-Nanoröhren (6) und/oder den eisenhaltigen Partikeln (6'), in dem Kunststoffmatrixmaterial (3) verschieden sind;
Bilden eines Lagenaufbaus (20) mit einer übereinander geschichteten Anordnung mindestens eines Abschnitts eines ersten und mindestens eines Abschnitts eines zweiten der Halbzeuge (10; 10');
Aushärten oder Konsolidieren des Lagenaufbaus (20), insbesondere unter erhöhtem Druck und/oder erhöhter Temperatur, zur Bildung des Verbundbauteils (31; 32; 33; 34).

16. Verfahren nach Anspruch 15,
**dadurch gekennzeichnet, dass** die zwei oder mehr Halbzeuge (10; 10'), mit deren Abschnitten der Lagenaufbau (20) gebildet wird, das gleiche Kunststoffmatrixmaterial aufweisen.
